# EUROPÄISCHE PATENTSCHRIFT

(11) **EP 0 504 870 B1**
(45) Veröffentlichungstag und Bekanntmachung des Hinweises auf die Patenterteilung: **04.09.1996**
(21) Anmeldenummer: 92104775.9
(22) Anmeldetag: 19.03.1992
(51) Int. Cl.: C04B 40/00, C04B 24/26, C04B 24/38

(54) **Verdickermischungen für Baustoffe**
Viscosifiers for building materials
Viscosifiants pour matériaux de construction

(30) Priorität: 20.03.1991 DE 4109092
(43) Veröffentlichungstag der Anmeldung: 23.09.1992
(73) Patentinhaber: HOECHST AKTIENGESELLSCHAFT, 65926 Frankfurt am Main (DE)
(72) Erfinder: Girg, Friedrich, W-6270 Idstein 2 (DE); Böhme-Kovac, Jozef, W-6501 Dexheim (DE)

(56) Entgegenhaltungen:
- EP-A- 0 416 405
- DE-A- 2 735 216
- DE-A- 3 716 974
- DE-A- 3 920 025
- US-A- 4 654 085

## Beschreibung

Es ist bekannt, daß Derivate natürlicher Polymere wie Celluloseether, Xanthangums, Guarderivate in Abhängigkeit von ihrer Kettenlänge und Konzentration die Viskosität in wäßrigen Medien in beträchtlichem Maße erhöhen können. Die damit verbundenen physikalischen Effekte ergeben die Möglichkeit, diese Substanzen als Verdickungsmittel, Wasserretentionsmittel, Schutzkolloide, Dispergiermittel, Stabilisatoren und Bindemittel bei zahlreichen industriellen Anwendungen zu nutzen. Die Vielfalt der Eigenschaften dieser Polymeren erlaubt eine komplexe Verwendung in sehr unterschiedlichen Industrie- und Produktbereichen. Hierzu zählen Baustoffe, Anstrichmittel, Klebstoffe, Wasch- und Reinigungsmittel, Kosmetika, Lebensmittel, Pharmazeutika, Produkte der Textil-, Leder, Papier-, Keramik-Industrie.

Die entscheidende und wichtigste Kenngröße der Polymere ist die in wäßriger Lösung gemessene Viskosität bei festgelegten Konditionen (Konzentrationen, Temperatur, Meßgerät, Schergefälle). Für viele Anwendungen werden Polymere benötigt, die in Wasser gelöst hohe Viskositäten ergeben, womit eine hohe Verdickungswirkung und Wasserrentention sowie eine deutliche Stabilitätsverbesserung, möglichst schon bei relativ geringen Konzentrationen der Polymere, erreicht werden können.

Viele Maßnahmen zielen darauf ab, die viskositätserhöhende Wirkung der Polymere zu erhöhen und deren Wirtschaftlichkeit und Effektivität zu steigern. Eine besonders sorgfältige Auswahl der Ausgangsrohstoffe (bei Celluloseethern hochwertige Chemiezellstoffe oder Baumwoll-Linters), verbunden mit übermäßigen Kettenabbau vermeidenden chemischen Umsetzungen (z.B. Veretherung) und besondere Maßnahmen zur schonenden Trocknung und Konfektionierung (Feinmahlung) bilden die Voraussetzung dafür, daß ein hoher Polymerisationsgrad erhalten bleibt und hochviskose Makromolekularsubstanzen hergestellt werden können. Darüberhinaus kann die Kettenlänge der Polymeren durch geeignete chemische Reaktionen verlängert werden, z.B. durch Vernetzungsreaktionen mit dichlorierten Aromaten oder Olefinen.

Die genannten Maßnahmen und Entwicklungen ergeben beispielsweise bei Celluloseethern Viskositätsbereiche (als 2 %ige wäßrige Lösung gemessen) von über 100 000 mPa.s, in Ausnahmefällen bis zu 400 000 mPa.s. Trotz schonender Konfektionierung (Feinmahlung) zu gebrauchsfähigen Pulverprodukten erfolgt doch ein teilweise signifikanter Kettenabbau der Polymere, der zwangsläufig zu verringerten Viskositäten führt. Damit verbunden sind wirtschaftliche Nachteile, zumal hochwertige Rohstoffe teuer einstehen und ein aufwendiger Herstellprozeß mit verringerter Ausbeute hierfür erforderlich ist.

Es ist weiter bekannt, daß Polyacrylate in Form ihrer Alkali- und Ammoniumsalze als wertvolle Verdickungsmittel zur Steuerung der Rheologie wäßriger Systeme, z.B. in Dispersionsfarben, pastösen Spachtelmassen und Klebstoffen, eingesetzt werden. Eine Besonderheit stellen die vernetzten bzw. vernetzten und zusätzlich mit Stärke gepfropften Polyacrylate dar, die als sogenannte Superabsorbents (auch SAPs genannt) in Hygieneartikeln (Windeln, Binden), in der Landwirtschaft und im Gartenbau, bei dem Transport empfindlicher Lebensmittel, in der Pharmazie, Kosmetik, im Tunnelbau, als Schlammverfestiger und zur Abdichtung von Deponien in steigendem Maße eingesetzt werden.

Die Fähigkeit dieser Polymeren, große Volumina wäßriger Flüssigkeiten unter Bildung einer stabilen Gelstruktur zu absorbieren und auch bei Belastung festzuhalten, ist die Voraussetzung für die erfolgreiche Anwendung auf den vorbeschriebenen Gebieten. Trotz der ausgeprägten Eigenschaft, außergewöhnlich hohe Mengen wäßriger Flüssigkeiten (bis zum 400- bis 1000-fachen des Eigengewichts) aufzunehmen und "festzuhalten", ergaben versuchsweise Anwendungen der SAPs in den Bereichen Baustoffe, Anstrichmittel und Klebstoffe zwar eine teilweise deutlich feststellbare Verdickungswirkung ohne auch nur annähernd das gleichfalls für o.g. Systeme erforderlich hohe Wasserrückhaltevermögen der natürlichen Polymere (wie z.B. bei Celluloseethern) zu erreichen.

Die Druckschrift EP-A 0 416 405 offenbart Mischungen aus Celluloseethern und Superabsorbern für die Anwendung als Tapetenkleister.

In DE-A 37 16 974 werden Hydrogele auf Basis von wasserabsorbierenden Polymeren beschrieben, die auch Celluloseether und Superabsorber enthalten können.

Es ist außerdem bekannt, daß Alkali- und Erdalkalisalze der Kondensationsprodukte von Arylsulfonsäuren, d.h. von Phenolsulfonsäuren und Naphthalinsulfonsäuren mit Formaldehyd als Stabilisierungshilfsmittel, Dispergiermittel, Plastifiziermittel und Verflüssiger in verschiedenen Industriezweigen Verwendung finden. Besondere Bedeutung besitzen die genannten Kondensationsprodukte als Plastifizierungs- und Verflüssigungsmittel bei der Beton- und Mörtelherstellung in der Bauindustrie.

Die hohe Dispergierfähigkeit und Verflüssigungwirkung führt insbesondere bei hoher Dosierung in Mörtel und Beton zu starker Absonderung eines Wasser-Bindemittel-Slurries, wodurch die anfangs vorhandene gute Plastizität und Verarbeitbarkeit infolge hoher Eigenverdichtung während der Lagerung des Mörtels oder Betons weitgehend verloren geht.

Es besteht der Wunsch nach einer einfachen und kostengünstigen Methode, die Viskositätsbereiche der natürlichen Hochpolymeren in wäßrigen Medien deutlich zu erhöhen und damit die Verdickungswirkung erheblich zu verbessern.

Überraschend wurde nun gefunden, daß mit Kombinationen aus wasserlöslichen natürlichen Polymeren oder deren Derivaten wie Celluloseether, Xanthamgums, Guarderivate, Stärkeether, Johannisbrotkernmehl mit Alkali- und Ammoniumsalzen von vernetzten und gegebenenfalls zusätzlich mit Stärke gepfropften Polyacrylaten, in der Technik als Superabsorbents bezeichnet, und mit Alkali- und Erdalkalisalzen von Kondensationsprodukten der Naphthalinsulfonsäure bzw. Phenolsulfonsäure mit Formaldehyd oder mit sulfonsäuremodifizierten Polykondensationsprodukten aus Melamin und Formaldehyd Viskositätsbereiche in wäßrigen Medien erreicht werden, die in erheblichem Maße über denen der genannten Ausgangssubstanzen liegen. Auch Kombinationen der genannten natürlichen Polymeren oder deren Derivaten mit den Superabsorbents allein ergeben eine signifikante Steigerung der Viskositätsbereiche gegenüber denen der eingesetzten Ausgangsprodukte.

Gegenstand der Erfindung ist eine Mischung aus
a) mindestens 10 Gew.-%, insbesondere 10 bis 99 Gew.-%, vorzugsweise 40 bis 90 Gew.-% eines wasserlöslichen natürlichen Polymeren und/oder einer wasserlöslichen Derivates eines natürlichen Polymeren,
b) 1 bis 89 Gew.-%, vorzugsweise 5 bis 60 Gew.-% eines Alkali- oder Ammoniumsalzes eines vernetzten, gegebenenfalls mit Stärke gepfropften Polyacrylats und
c) 1 bis 60 Gew.-%, vorzugsweise 1 bis 40 Gew.-% eines wasserlöslichen Alkali, Ammonium- oder Erdalkalisalzes von Arylsulfonsäure-Formaldehyd-Kondensationsprodukten oder eines sulfonsäuremodifizierten Polykondensationsprodukts aus Melamin und Formaldehyd.

Unter dem Begriff "Baustoffprodukte" sind hier und im folgenden Spachtelmassen, Klebmittel, Dispersionsfarben, Kunststoffputze, Fugenmassen und andere Produkte dieser Art zu verstehen.

Zur Erhöhung der Viskosität enthalten diese Produkte eine Mischung der oben genannten Komponenten a) bis c) in der angegebenen Zusammensetzung. Diese Komponenten sollen im folgenden näher beschrieben werden.
a) Wasserlösliche natürliche Polymere und deren Derivate
Hierfür kommen bevorzugt folgende Produkte in Frage:
1. Celluloseether
Die Viskositätsgrenzen dieser Celluloseether liegen üblicherweise bei 10 - 500 000, insbesondere 50-150 000 mPa.s (gemessen als 2 %ige wäßrige Lösung mit Höppler-Kugelfall Viskosimeter bei 20 °C in dest. Wasser). Die in der Praxis wichtigsten Celluloseether haben folgende Veretherungsdaten:

| | DS | MS |
|---|---|---|
| Methylcellulose | 1,4 - 2,3 | |
| Methylhydroxyethylcellulose | 1,3 - 2,0 | 0,05 - 0,5 |
| Methylhydroxypropylcellulose | 1,3 - 2,2 | 0,1 - 1,0 |
| Hydroxyethylcellulose | - | 1,8 - 3,5 |
| Hydroxyethylhydroxypropylcellulose | | MS HE: 0,9 - 1,2 |
| | | MS HP: 0,6 - 0,9 |
| Hydroxyproplycellulose | - | 2 - 3,5 |
| Ethylhydroxyethylcellulose | 0,7 - 1,2 | 0,8 - 2,7 |
| Carboxymethylcellulose | 0,5 - 1,5 | - |
| Carboxymethylhydroxyethylcellulose | 0,3 - 0,6 | 0,3 - 2,3 |
| Alkoxy-hydroxypropyl-hydroxyethylcellulose | - | 1,5 - 3,5 |

| Alkoxy-Gruppe: gerad-kettig oder verzweigt, 2 - 8 C-Atome, 0,05 - 50 % bezogen auf Gewicht des substituierten Celluloseethers | | |
|---|---|---|
| Carboxymethylierte Methyl- | DS OCH₃ | MS |
| hydroxyethyl- oder | 1,3 - 2,0 | 0,05 - 0,5 |
| Methyl-hydroxypropylcellulose | 1,3 - 2,2 | 0,1 - 1,0 |

**2. Stärkeether**
- Hydroxypropylstärke:: MS 0,1 - 0,8
- Carboxymethylstärke:: DS 0,1 - 0,8
- Hydroxypropylcarboxymethylstärke:: DS 0,1 - 0,5/MS 0,1 - 0,8
- Viskositätsgrenzen:: 1 - 10 000 mPa·s (2 %ige wäßrige Lösung) gemessen mit Höppler-Viskosimeter bei 20 °C und in dest. Wasser

**3. Guar Gum Derivate**

| | |
|---|---|
| Guar Endospermmehl (natürliches Galaktomannan) Viskosität (1 % in Wasser): (gem. mit Brookfield RVT, 25 °C 20 UpM) | 100 - 20 000 mPa·s |
| Carboxymethylguar Viskosität (3 % in Wasser): | 100 - 20 000 mPa·s |
| Hydroxypropylguar Viskosität (1 % in Wasser): | 100 - 10 000 mPa·s |
| Carboxymethylhydroxypropylguar Viskosität (1 % in Wasser): | 100 - 20 000 mPa·s |
| Kationisierter Guar (quarternäre Substitution DS ca. 0,13) Viskosität (1 % in Wasser): | 100 - 20 000 mPa·s |

**4. Xanthan Gum**

| | |
|---|---|
| (Polysaccharide, anionisch, hergestellt durch Fermentation und Extraktion Xanthimonas campestris) Viskosität (1 % in Wasser): | 100 - 10 000 mPa·s |

**5. Johannisbrotkernmehl**
**6. Alginate**
b) **Superabsorbents (SAPS)**
Superabsorbents sind Gitterstrukturen auf Basis neutralisierter Polyacrylsäuren, die bei der Radikal-Copolymerisation der Monomeren mit kleinen Mengen bestimmter Vernetzungsmittel entstehen. Die Funktionalität und Reaktivität der Vernetzungsmittel ist von größter Bedeutung für die Eigenschaften eines Superabsorbents.

Für die Herstellung einer polymeren Gitterstruktur gibt es im wesentlichen 2 Prinzipien:
a) Das Gitter (Gitterstruktur) wird in einem Polymerisationsschritt, beginnend mit den Monomeren, synthetisiert, wobei bestimmte Vernetzungsagenzien für die Verzweigung und Bildung der Gitterstruktur benötigt werden.
b) Ein vorsynthetisiertes geradkettiges oder verzweigtes Polymer wird vernetzt.

Für die Herstellung von SAPs besitzt die unter a) genannte Methode die weitaus größte Bedeutung; für spezielle Produkte wird Methode b) verwendet. Für den Polymerisationsprozeß werden verschiedene Techniken eingesetzt (z.B. Emulsions- und Gelpolymerisation). Dabei wird eine wäßrige Lösung des Monomers Acrylsäure mit kleinen Mengen eines Vernetzers (polyfunktionales Monomer) polymerisiert. Wasser dient als Verdünnungs- und Lösemittel (exothermer Prozeß) um zu hohe Temperaturen zu vermeiden. Die Polymerisation kann im Kessel oder mit Hilfe des Dünnschichtverfahrens erfolgen; Konzentrationen bis zu 60 % sind üblich.

Die Superabsorbents können auch mit Stärke gepfropft werden. Diese Pfropfung mit Stärke erfolgt während des Polymerisations- und Vernetzungsprozesses im Eintopf-Verfahren. Durch Erhitzen der Stärke in Wasser wird diese aufgeschlossen und als Lösung zu Beginn des Polymerisationsprozesses zugegeben. Der Stärkeanteil, bezogen auf SAP, kann 3 - 30 Gew.-% betragen.

Superabsorbents können nur im pH-Bereich von 4 bis 10 Wasser absorbieren; eine Neutralisation (teilweise) kann vor oder nach der Polymerisation vorgenommen werden. Das durch die Polymerisation entstandene Produkt ist ein feuchtes Gel, das mit einem Gel-Schneider zerkleinert und anschließend getrocknet wird.

Die Vernetzung zur Herstellung von SAPs erfolgt weitgehend über covalente Bindungen, d.h. durch Verwendung von polyfunktionalen Monomeren während der Polymerisation (Vernetzungsmittel mit Doppelbindungen).

Weitere Möglichkeiten für die Vernetzung über covalente Bindungen bieten polyfunktionale Moleküle (Diepoxide, Azirine, Polyalkohole). Bereits vorhandene, gering vernetzte Polymer-Ketten werden mit den genannten Vernetzungsmitteln zusätzlich oberflächenvernetzt.

Dies erlaubt Kombinationen der guten Absorptionseigenschaften der gering vernetzten Superabsorbents (die eine hohe Absorptionsfähigkeit, aber hohe Mengen an Extrahierbarem und ein geringes Absorptionsverhältnis infolge Gel-Blockierung besitzen) mit den Vorteilen der hochvernetzten SAPs (keine Gelblockierung, bessere Absorptionskapazität und -stabilität unter Druckbeanspruchung).

Wichtige Vernetzungsreagenzien für die Herstellung von SAPs sind
a) Methylenbisacrylamid; Vernetzer mit hoher Reaktivität, führt aber zu weniger druckstabilen SAPs;
b) Diethylenglykoldialkylether; Vernetzer mit geringerer Reaktivität, wodurch SAP-Gele mit besseren elastischen Eigenschaften und höherer Stabilität unter Druckbeanspruchung hergestellt werden können;
c) Vinylverbindungen (Vinylether, Vinylester, Vinylphosphonsäure).

Zur Erzielung einer optimalen Vernetzungs- und Gitterstruktur der SAPs werden im Herstellungsprozeß Gemische von hoch- und gering-reaktiven Vernetzungsreagenzien eingesetzt, wobei durch entsprechende Variation der Mischungsverhältnisse der eingesetzten Vernetzungskomponenten die Dichte und Beschaffenheit der Gitterstrukturen über weite Bereiche verändert und den Erfordernissen entsprechend angepaßt werden können.

Als Komponente c) kommen in Frage:
1. Polykondensationsprodukte aus Naphthalinsulfonsäure mit Formaldehyd in Form ihrer Alkali-, Ammonium- und Erdalkalisalze;
2. Sulfonsäuremodifizierte Polykondensationsprodukte aus Melamin und Formaldehyd in Form ihrer Alkali-, Ammonium und Erdalkalisalze.

Die pulverförmigen oder granulatförmigen Komponenten a), b) und c) können den Baustoffprodukten einzeln zugemischt werden oder man mischt zunächst die Komponenten a), b) und c) für sich allein und gibt diese Mischung dann zu den Baustoffprodukten. Das Einarbeiten dieser Komponenten in die Baustoffprodukte erfolgt durch übliche Rühr- und Mischprozesse, beispielsweise durch Kneten. Die Summe der Komponenten a), b) und c) in den Baustoffprodukten beträgt 0,01 bis 2, vorzugsweise 0,1 bis 0,5 Gew.-%, bezogen auf die Trockenmasse.

Die Komponenten a), b) und c) können auch während deren Herstellung miteinander gemischt werden, beispielsweise durch intensives Vermischen oder Verkneten vor oder nach dem Trockungsprozeß bei der Herstellung der jeweiligen Komponenten. Eine anschließende gemeinsame Feinmahlung ergibt besonders homogene und schnellwirksame Verdickungssysteme. Bei Kombinationen, die durch einfaches Mischen der Komponenten hergestellt werden, haben sich Superabsorbents mit einer Kornfeinheit < 0,1 mm als besonders gut geeignet erwiesen.

Die beschriebenen Mischungen zeigen im wäßrigen Medium eine starke verdickende Wirkung. Daneben ist in Abhängigkeit von der jeweiligen Zusammensetzung dieser Mischungen teilweise ein stark strukturviskoses Verhalten zu beobachten, das sich auf flüssig-pastöse Systeme überträgt und darin zu einer bemerkenswerten Strukturgebung führt. Die beschriebenen Mischungen eignen sich daher besonders gut als Additive für Baustoffprodukte. Hierzu gehören pastöse Fliesenkleber, Spachtel- und Fugenmassen (joint compounds in Pulverform oder pastös, mit Kunststoffdispersionen, Polyvinylalkoholen, Tierleim, Kasein als organisches Bindemittel) elastisch bzw. plastisch eingestellte Fugenmassen auf Polyacrylatbasis, Kunststoffdispersionsfarben.

Diese Verbesserung der Struktureigenschaften, verbunden mit einer gesteigerten Verdickungswirkung, durch die beschriebenen Kombinationen erlauben den völligen oder teilweisen Verzicht auf bisher erforderliche mineralische Verdickungs- und Strukturhilfsmittel, wie beispielsweise Bentonite, Attapulgite, hochdisperse Kieselsäuren. Der erhebliche Nachteil dieser anorganischen Verdicker, die starke Erhöhung des Schwindverhaltens während und nach Härtung bzw. Trocknung damit hergestellter Baustoffsysteme, kann durch die beschriebenen Kombinationen in hohem Maße verringert oder beseitigt werden. Darüberhinaus ergeben sich Kostenreduzierungen infolge verringerter Einsatzmengen der Kombinationen gegenüber den üblichen Dosierungen der natürlichen Polymere. Die beanspruchten Kombinationen verbessern zudem die Verarbeitbarkeit und die Geschmeidigkeit von flüssigpastösen Systemen. Die oft störende Klebneigung bei Baustoffprodukten, die hochviskosen Celluloseether als Verdickungs- und Wasserretentionsmittel enthalten, wird durch Verwendung der genannten Kombinationen erheblich reduziert. Auch in Baustoffsystemen auf mineralischer Basis wirken sich Zusätze der beanspruchten Kombinationen positiv auf die Verarbeitbarkeit aus. Die daraus resultierende verringerte Klebneigung erlaubt ein leichteres Glätten der Mörtel- und Putzmassen. Vorteilhaft zeigen sich diese Eigenschaften auch bei Betonmischungen (Unterwasserbeton, Spritzbeton, Pumpbeton), deren Homogenität, Stabilität und Pumpfähigkeit verbessert werden.

### Beispiele:

Für die im folgenden beschriebenen Mischungen wurden folgende Einzelkomponenten eingesetzt:

| | Viskositätsstufe gemessen in 2%iger wäßriger Lösung | Veretherungsgrad | |
|---|---|---|---|
| | | DS | MS |
| Methylhydroxiethylcellulose (1) | 30 000 | 1,5 | 0,12 |
| Methylhydroxiethylcellulose (2) | 50 000 | 1,5 | 0,11 |
| Methylhydroxiethylcellulose (3) | 6 000 | 1,5 | 0,13 |
| Methylhydroxiethylcellulose (4) | 6 000 | 1,5 | 0,10 |
| Methylhydroxiethylcellulose (5) | 15 000 | 1,8 | 0,12 |
| Methylhydroxiethylcellulose (6) | 6 000 | 1,6 | 0,15 |
| Methylhydroxiethylcellulose (7) | 30 000 | 1,55 | 0,21 |
| Methylhydroxiethylcellulose (8) | 6 000 | 1,64 | 0,24 |
| Methylhydroxiethylcellulose (9) | 4 000 | 1,88 | 0,21 |
| Hydroxiethylcellulose | 6 000 | - | 2,1 |
| Carboximethylhydroxiethylcellulose | 3 000 | 0,55 | 0,75 |
| Ethylhydroxiethylcellulose | 1 000 | 0,97 | 1,9 |
| Methylhydroxipropylcellulose | 4 000 | 1,88 | 0,21 |
| Alkoxyhydroxypropylhydroxyethylcellulose | 25 000 | DS=OC₃H₅(OH)-OC₄H₉ 0,05 | |
| | | MS = OC₂H₄ 2,45 | |
| Alkoxyhydroxypropylhydroxyethylcellulose | 25 000 | DS=OC₃H₅(OH)-OC₄H₉ 0,08 | |
| | | MS = OC₂H₄ 3,40 | |

| | Viskositätsstufe gemessen in 2%iger wäßriger Lösung | Veretherungsgrad | |
|---|---|---|---|
| | | DS | MS |
| Hydroxypropylstärke (vernetzt mit Epichlorhydrin) | 1 300 (5%ige wäßrige Lösung) | - | 0,64 |
| Guargum (Mepro Guar CSA 200/50) | 5 000 (1%ige Lösung) | - | - |
| Hydroxipropylguam (Jaguar ^{(R)} 8060) | 4 000 (1%ige Lösung) | - | 0,42 |
| Carboximethylhydroxipropylguam (Jaguar (R) 8600) | 3 800 (1%ige Lösung) | 0,06 | 0,40 |
| Guargum, quaternär substituiert (Meyprofloc 130) | 2 000 (1%ige Lösung) | quaternärer Substitutionsgrad = 0,13 | |
| Xanthangum (Rhodopol ^{(R)} 50 MD) | Ausgangsviskosität: 6300mPa.s (2%ige Lösung) | | |

| | Gesamtabsorptionsfähigkeit in | | Zentrifuggenretention 0,9/ige NaCl-Lsg. (g/g) | Absorptionsfähigkeit unter Druck 0,9%ige NaCl-Lsg. (ml/g) | Extrahierbares (%) |
|---|---|---|---|---|---|
| | ention. H2O (g/g) | 0,9%ige NaCl-Lsg. (g/g) | | | |
| Superabsorbent (1) Sanwet ^{(R)} IM 1500 | 500 | 50 | 32 | 15 | 7 |
| Superabsorbent (2) Sanwet ^{(R)} IM 1000 | 1000 | 65 | 42 | 5 | 14 |
| Superabsorbent (3) Sanwet ^{(R)} IM 5000S | 400 | 48 | 32 | 32 | 3 |

| Naphthalinsulfonsäure-Formaldehyd Kondensationsprodukt; Na-Salz: | |
|---|---|
| Eigenschaften | Typische Daten |
| Lieferform | flüssig/pulverförmig |
| Konzentration (Aktivgehalt) | 20 - 40 %ig/ 70 - 96 % |
| Na-Sulfatgeb. | 0 - 25 % |
| Molare Masse | 4 000 - 40 000 |
| pH-wert | 6,5 - 11 |
| Viskosität (23 °C) | 10 - 150 mPa.s fl. Produkte) |

| Melamin-Formaldehyd Kondensationsprodukt, sulfoniert; Na-Salz: | |
|---|---|
| Eigenschaften | Typische Daten |
| Lieferform | flüssig/pulverförmig, Granulate |
| Konzentration (Aktivgehalt) | ca. 20 %ig/ 80 - 100 % |
| Molare Masse | 20 000 - 30 000 |
| pH-wert | 8 - 12 |
| Dichte | flüssige Produkte:1,1 g/m² |
| | Festprodukte:1,7-1,9 g/cm³ |

Die Herstellung der im folgenden beschriebenen Mischungen der oben angegebenen Einzelkomponenten erfolgte durch einfaches Mischen der Komponenten in den angegebenen Mengenverhältnissen. Hierbei bedeutet GT jeweils Gewichtsteile.

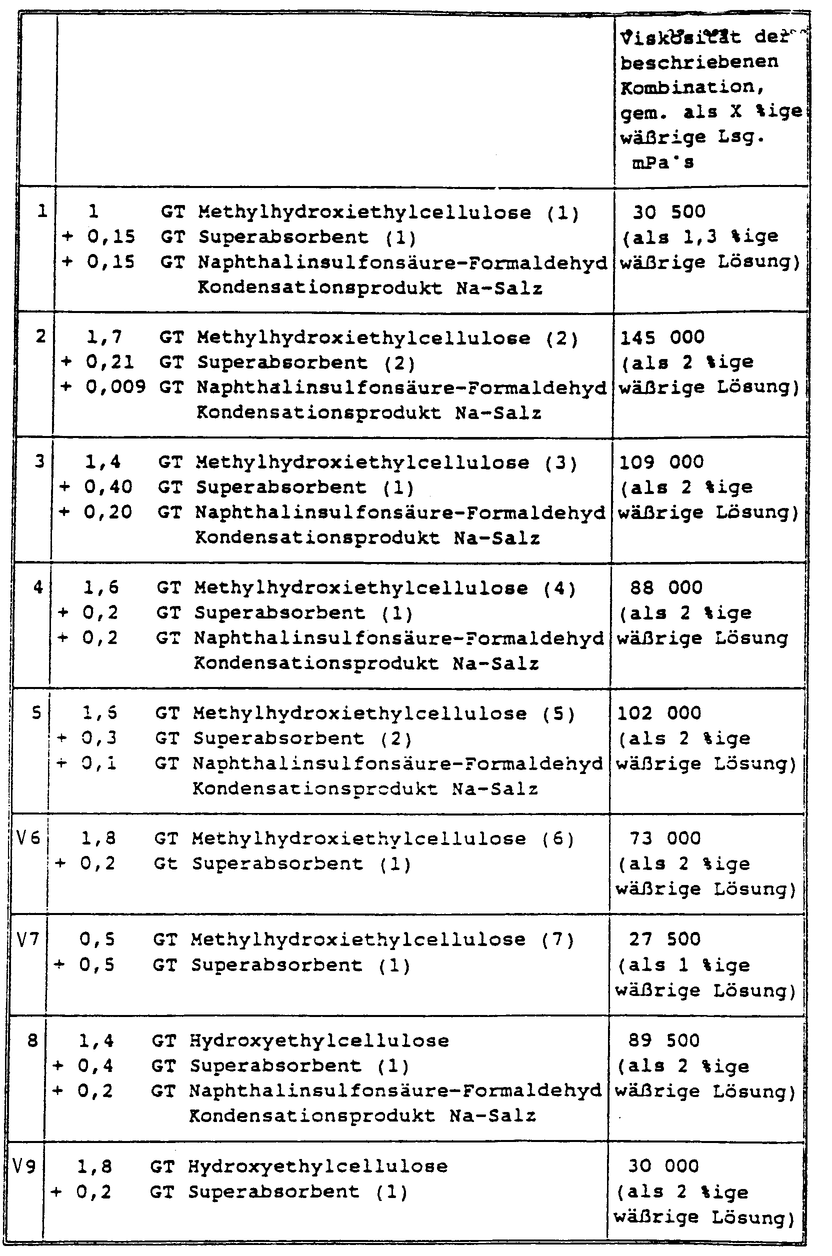

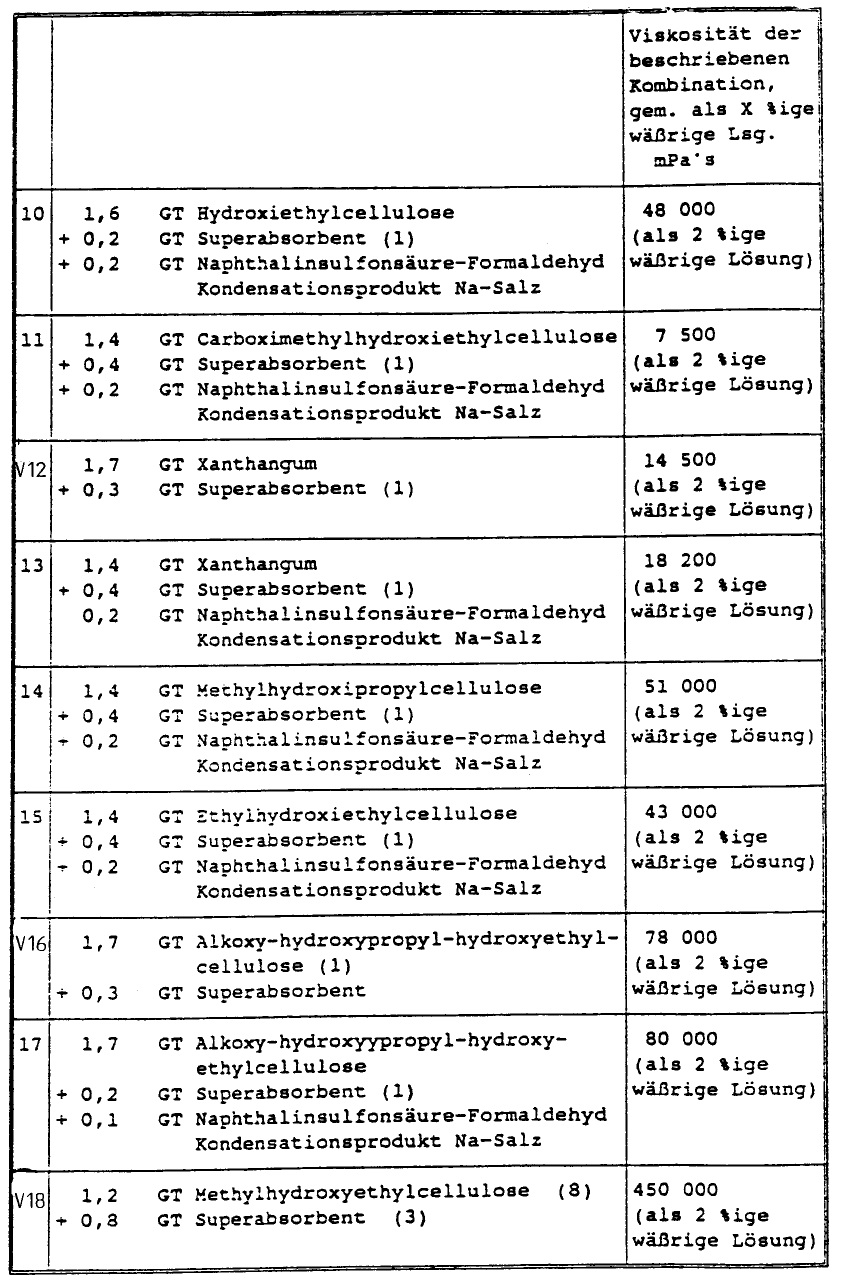

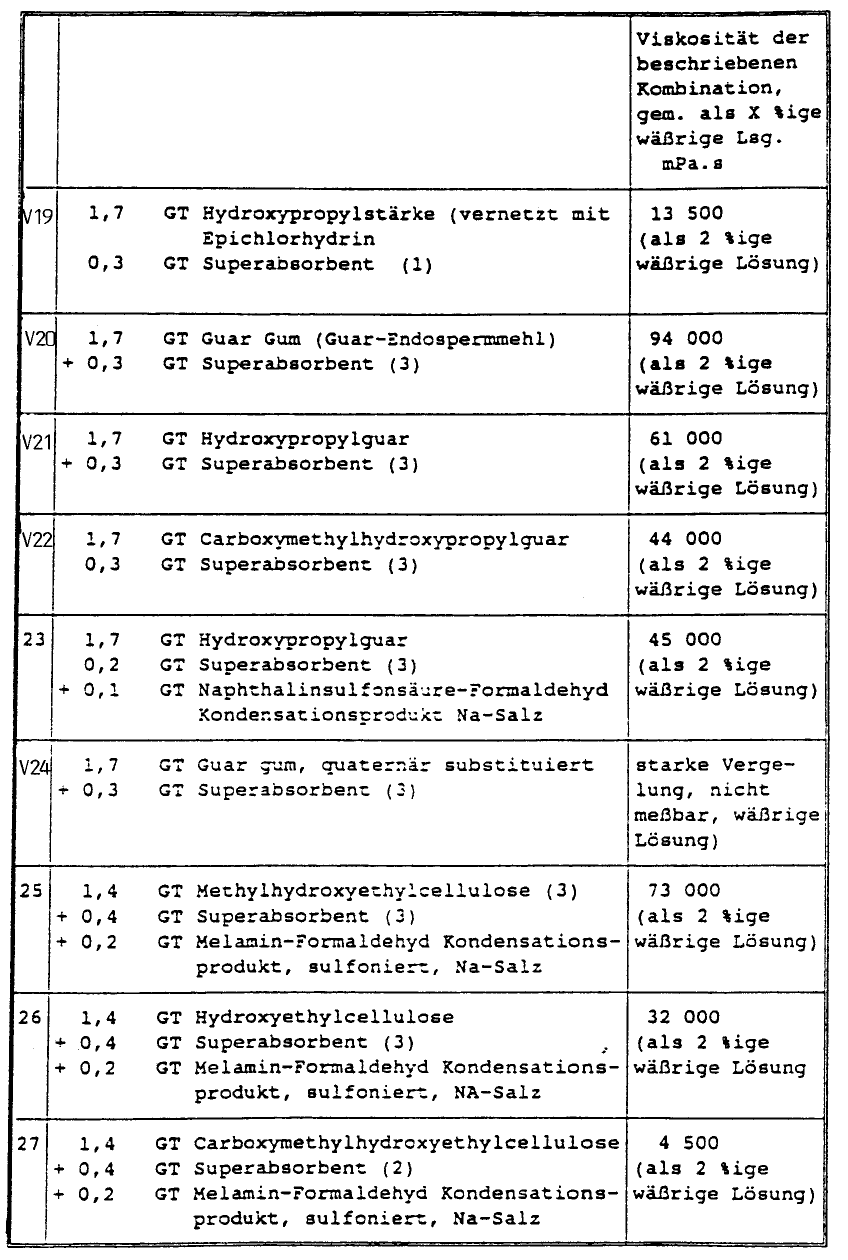

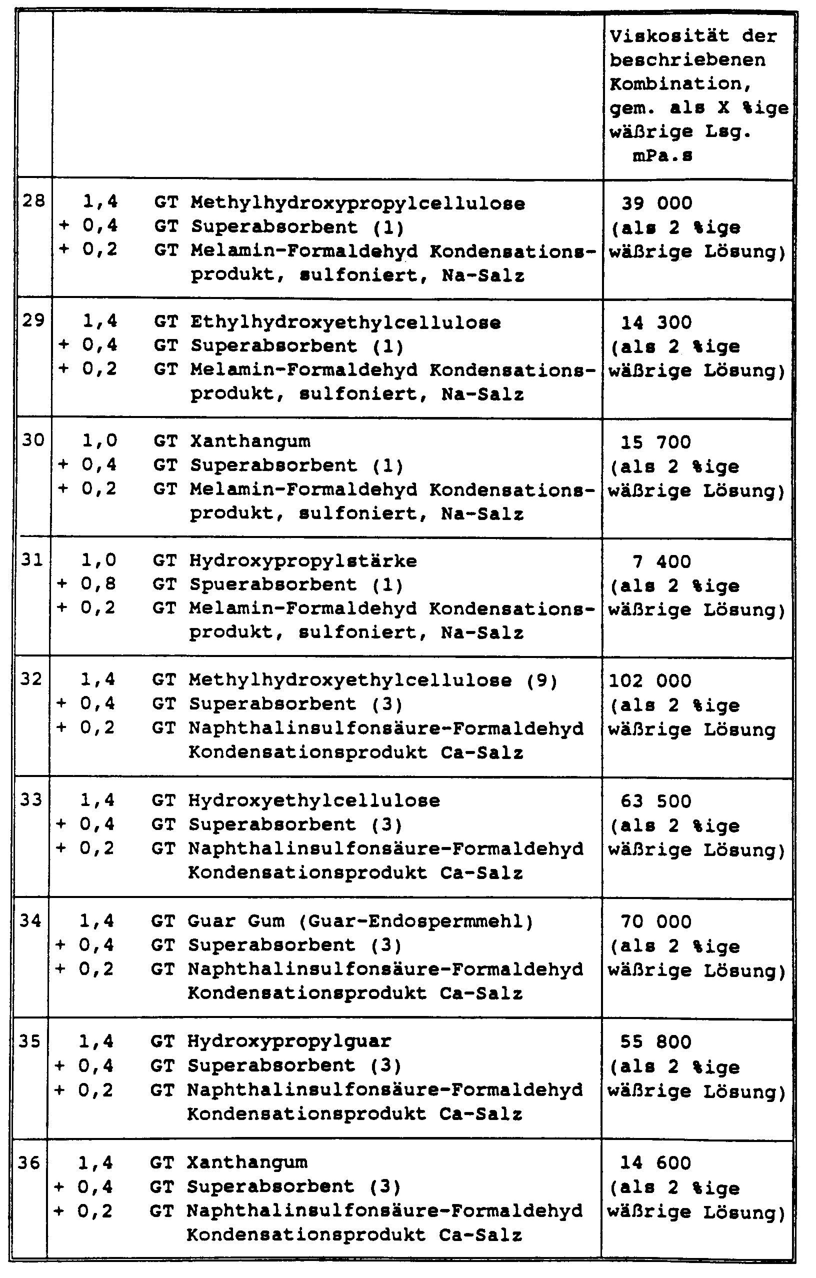

| Ergebnisse der Viskositätsmessungen (Brookfield RV, 20 UpM, 25 °C RT) | | | |
|---|---|---|---|
| Nr. | Kombinationen, bestehend aus: | Viskosität der Methylhydroxyethylcellulose als 1%ige wäßrige Lsg. mPa^{·}s | Viskosität der beschriebenen Kombination, gem. als X %ige wäßrige Lsg. mPa^{·}s |
| V37 | 1,7 GT Methylhydroxyethylcellulose + 0,3 GT Superabsorbent (1) | - | 29 300 mPa^{·}s (als 1 %ige wäßrige Lösung) |
| 38 | 1,7 GT Methylhydroxyethylcellulose + 0,2 GT Superabsorbent (1) + 0,2 GT Naphthalinsulfonsäure-Formaldehyd Kondensationsprodukt Na-Salz | - | 26 000 mPa^{·}s (als 1 %ige wäßrige lösung |
| V39 | Methylhydroxyethylcellulose ohne Zusätze | 2 400 | - |

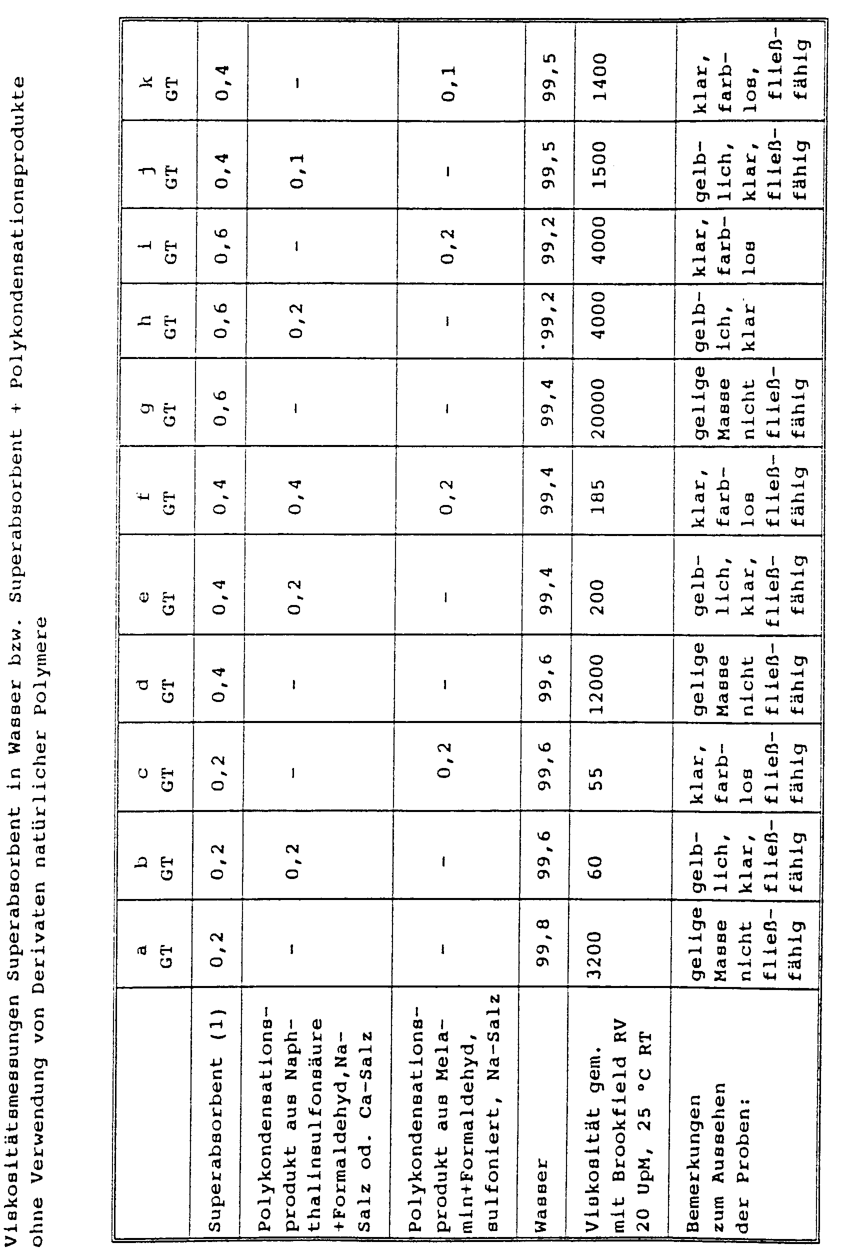

### Beispiele für erfindungsgemäße Baustoffprodukte

### 1. Pastöser Fliesenkleber

| | a (Vergleichsprobe) | b (Vergleichsprobe) | c | d (Vergleichsprobe) |
|---|---|---|---|---|
| Komponenten | GT | GT | GT | GT |
| Füllstoffgemisch, bestehend aus feingemahlenem Calcium carbonat und Glimmermehl | 67 | 67 | 67 | 67 |
| Bentonit | 1 | 1 | 1 | 0,8 |
| Hydroxyethylcellulose, Viskositätsstufe 100 000 mPa.s (2%ige wäßrige Lösung) | 0,68 | 0,4 | 0,30 | 0,30 |
| Superabsorbent (1) | - | 0,2 | 0,25 | 0,30 |
| Polykondensationsprodukt, Basis Naphthalinsulfonsäure-Formaldehyd-Alkalisalz | - | - | 0,05 | - |
| Wasser | 20-25 | 20-25 | 20-25 | 20-25 |
| Kunststoffdispersion (Basis Styrol/Acrylat) | 10 | 10 | 10 | 10 |
| Entschäumer | 0,1 | 0,1 | 0,1 | 0,1 |
| Konservierungsmittel | 0,15 | 0,15 | 0,15 | 0,15 |
| Aminomethylpropanol (als Alkalisierungsmittel) | 0,1 | 0,1 | 0,1 | 0,1 |
| Abrutschverhalten von Steinzeugfliesen (10x10 cm) auf Beton (mm) | 2-3 | 1-2 | 2-3 | 0 |

| klebeoffene Zeit (min) geprüft mit Steinzeugfliesen (5x5 cm) auf Beton | | | | |
|---|---|---|---|---|
| Belastg. d. Fliese mit 1 kg | 20 | 25 | 25-30 | 20-25 |
| Belastg. d. Fliese mit 2 kg | 30 | 35 | 35-40 | 30-35 |

Die Verwendung der Polykondensationsprodukte in den beschriebenen Kombinationen aus Derivaten natürlicher Polymere mit Superabsorbents führt zu klaren, überwiegend noch gießfähigen Polymerlösungen. Besonders vorteilhaft wirken sich hierbei Zusätze der Melamin-Formaldehyd Kondensationsprodukte aus, wodurch völlig klare und farblose Lösungen entstehen.

Die Lösungen von natürlichen Polymeren zeigen von Natur aus in vielen Fällen eine mehr oder minder stark ausgeprägte Trübung, die durch Zugabe der Superabsorbents und Melamin-Formaldehyd-Kondensationsprodukte beseitigt wird. Dieser optische Effekt bedeutet für natürliche Polymere eine Qualitätsverbesserung bei denjenigen Anwendungen, für die Klarlöslichkeit der Polymere in Wasser erforderlich ist.

## Patentansprüche (Patentansprüche für folgende(n) Vertragsstaat(en): AT, DE, FR, GB)

1. Mischung aus
a) mindestens 10 Gew.-% eines wasserlöslichen, natürlichen Polymeren und/oder eines wasserlöslichen Derivates eines natürlichen Polymeren,
b) 1 bis 89 Gew.-% eines Alkali- oder Ammoniumsalzes eines vernetzten, gegebenenfalls mit Stärke gepfropften Polyacrylats und
c) 1 bis 60 Gew.-% eines wasserlöslichen Alkali-, Ammonium- oder Erdalkalisalzes eines Arylsulfonsäure-Formaldehyd-Kondensationsprodukts oder eines sulfonsäuremodifizierten Polykondensationsprodukts aus Melamin und Formaldehyd.

2. Mischung nach Anspruch 1, dadurch gekennzeichnet, daß die Komponente c) ein wasserlösliches Alkali-, Ammonium- oder Erdalkalisalz eines Polykondensationsprodukts aus Naphthalinsulfonsäure mit Formaldehyd ist.

3. Mischung nach Anspruch 1 aus 40 bis 90 Gew.-% der Komponente a), 5 bis 60 Gew.-% der Komponente b) und 1 bis 40 Gew.-% der Komponente c).

4. Verfahren zur Herstellung einer Mischung nach Anspruch 1, dadurch gekennzeichnet, daß die Komponenten a), b) und c) während der Herstellung durch intensives Vermischen oder Verkneten vor oder nach dem Trocknungsprozeß bei der Herstellung der jeweiligen Komponenten miteinander gemischt werden.

5. Verwendung der Mischung nach Anspruch 1 in Baustoffprodukten.

## Patentansprüche (Patentansprüche für folgende(n) Vertragsstaat(en): ES)

1. Verfahren zur Herstellung einer Mischung aus
a) mindestens 10 Gew.-% eines wasserlöslichen, natürlichen Polymeren und/oder eines wasserlöslichen Derivates eines natürlichen Polymeren,
b) 1 bis 89 Gew.- % eines Alkali- oder Ammoniumsalzes eines vernetzten, gegebenenfalls mit Stärke gepfropften Polyacrylats und
c) 1 bis 60 Gew.- % eines wasserlöslichen Alkali-, Ammonium- oder Erdalkalisalzes eines Arylsulfonsäure-Formaldehyd-Kondensationsprodukts oder eines sulfonsäuremodifizierten Polykondensationsprodukts aus Melamin und Formaldehyd, dadurch gekennzeichnet, daß die pulverförmigen oder granulatförmigen Komponenten c), b) und c) gemischt werden.

2. Verfahren nach Anspruch 1, dadurch gekennzeichnet, daß als Komponente c) ein wasserlösliches Alkali-, Ammonium- oder Erdalkalisalz eines Polykondensationsprodukts aus Naphthalinsulfonsäure mit Formaldehyd eingesetzt wird.

3. Verfahren nach Anspruch 1, dadurch gekennzeichnet, daß 40 bis 90 Gew.-% der Komponente a), 5 bis 60 Gew.-% der Komponente b) und 1 bis 40 Gew.-% der Komponente c) gemischt werden.

4. Verfahren nach Anspruch 1, dadurch gekennzeichnet, daß die Komponenten a), b) und c) während der Herstellung durch intensives Vermischen oder Verkneten vor oder nach dem Trocknungsprozeß bei der Herstellung der jeweiligen Komponenten miteinander gemischt werden.

5. Verwendung der nach Anspruch 1 hergestellten Mischung in Baustoffprodukten.

## Claims (Claims for the following Contracting State(s): AT, DE, FR, GB)

1. A mixture comprising
a) at least 10 % by weight of a water-soluble natural polymer and/or of a water-soluble derivative of a natural polymer
b) 1 to 89 % by weight of an alkali metal salt or ammonium salt of a crosslinked polyacrylate which, if desired, is grafted with a starch, and
c) 1 to 60 % by weight of a water-soluble alkali metal salt, ammonium salt or alkaine earth metal salt of an arylsulfonic acid/formaldehyde condensation product or of a sulfo-modified melamine/formalyhde polycondensation product.

2. The mixture as claimed in claim 1, wherein component c) is a water-soluble alkali metal salt, ammonium salt or alkaine earth metal salt of a naphthalenesulfonic acid/formaldehyde polycondensation product.

3. The mixture as claimed in claim 2, comprising 40 to 90 % by weight of component a), 5 to 60 % by weight of component b) and 1 to 40 % by weight of component c).

4. A process for producing a mixture as claimed in claim 1, wherein components a), b) and c) are mixed with one another during their preparation by intensive mixing or kneading before of after the drying step during the preparation of the respective components.

5. Use of the mixture as claimed in claim 1 in building material products.

## Claims (Claims for the following Contracting State(s): ES)

1. A process for the preparation of a mixture comprising
a) at least 10 % by weight of a water-soluble, natural polymer and/or of a water-soluble derivative of a natural polymer,
b) 1 to 89 % by weight of an alkali metal salt or of an ammonium salt of a cross-linked polyacrylate which, if desired, is grafted with starch, and
c) 1 to 60 % by weight of a water-soluble alkali metal salt, ammonium salt or alkaline earth metal salt of an arylsulfonic acid/formaldehyde condensation product or of a sulfo-modified melamine/formaldehyde polycondensation product,
wherein components a), b) and c), which are in the form of powders or granules, are mixed with one another.

2. The process as claimed in claim 1, wherein a water-soluble alkali metal salt, ammonium salt or alkaline earth metal salt of a naphthalenesulfonic acid/formaldehyde polycondensation product is used as component c).

3. The process as claimed in claim 1, wherein 40 to 90 % by weight of component a), 5 to 60 % by weight of component b) and 1 to 40 % by weight of component c) are mixed with one another.

4. The process as claimed in claim 1, wherein components a), b) and c) are mixed with one another during their preparation by intensive mixing or kneading before or during the drying process during the preparation of the respective components.

5. Use of the mixture prepared as claimed in claim 1 in building material products.

## Revendications (Revendications pour l'(les) Etat(s) contractant(s) suivant(s): AT, DE, FR, GB)

1. Mélange
a) d'au moins 10 % en poids d'un polymère naturel soluble dans l'eau et/ou d'un dérivé soluble dans l'eau d'un polymère naturel,
b) de 1 à 89 % en poids d'un sel alcalin ou d'ammonium d'un polyacrylate réticulé, éventuellement avec l'amidon greffé et
c) de 1 à 60 % en poids d'un sel alcalin, d'ammonium ou alcalino-terreux d'un produit de condensation d'un acide arylsulfonique-formaldéhyde ou d'un produit de polycondensation de la mélamine et du formaldéhyde modifié par l'acide sulfonique.

2. Mélange selon la revendication 1, caractérisé en ce que le constituant c) est un sel alcalin, d'ammonium ou alcalino-terreux d'un produit de polycondensation de l'acide naphtalènesulfonique avec le formaldéhyde.

3. Mélange selon la revendication 1, de 40 à 90 % en poids du constituant a), de 5 à 60 % en poids du constituant b) et de 1 à 40 % en poids du constituant c).

4. Procédé pour la préparation d'un mélange selon la revendication 1, caractérisé en ce que les constituants a), b) et c) sont mélangés entre eux au cours de la préparation par mélange intense ou par malaxage, avant ou après le processus de séchage au cours de la préparation des constituants respectifs.

5. Utilisation du mélange selon la revendication 1 dans les matériaux de construction.

## Revendications (Revendications pour l'(les) Etat(s) contractant(s) suivant(s): ES)

1. Procédé pour la préparation d'un mélange
a) d'au moins 10 % en poids d'un polymère naturel soluble dans l'eau et/ou d'un dérivé soluble dans l'eau d'un polymère naturel,
b) de 1 à 89 % en poids d'un sel alcalin ou d'ammonium d'un polyacrylate réticulé, éventuellement avec l'amidon greffé et
c) de 1 à 60 % en poids d'un sel alcalin, d'ammonium ou alcalino-terreux d'un produit de condensation d'un acide arylsulfonique-formaldéhyde ou d'un produit de polycondensation de la mélamine et du formaldéhyde modifié par l'acide sulfonique,
caractérisé en ce que l'on mélange les constituants pulvérulents ou granulés a), b) et c).

2. Procédé selon la revendication 1, caractérisé en ce que l'on utilise en tant que constituant c) un sel alcalin, d'ammonium ou alcalino-terreux d'un produit de polycondensation d'un acide naphtalène sulfonique avec le formaldéhyde.

3. Procédé selon la revendication 1 caractérisé en ce que 40 à 90 % en poids du constituant a), de 5 à 60 % en poids du constituant b) et de 1 à 40 % en poids du constituant c) sont mélangés.

4. Procédé selon la revendication 1, caractérisé en ce que les constituants a), b) et c) sont mélangés entre eux au cours de la préparation par mélange intense ou par malaxage avant ou après le processus de séchage au cours de la préparation des constituants respectifs.

5. Utilisation du mélange préparé selon la revendication 1 dans les matériaux de construction.
